# EUROPEAN PATENT APPLICATION

(11) **EP 1 693 278 A2**
(43) Date of publication of application: **23.08.2006**
(21) Application number: 06003246.3
(22) Date of filing: 17.02.2006
(51) Int. Cl.: B62D 1/04, H01H 21/18

(54) **Switch on steering wheel**

(30) Priority: 18.02.2005 JP 2005042712
(71) Applicant: ALPS ELECTRIC CO., LTD., Tokyo 145-8501 (JP)
(72) Inventor: Itagaki, Tsutomu, Ota-ku Tokyo 145-8501 (JP)
(74) Representative: Klunker . Schmitt-Nilson . Hirsch

(57) **Abstract**

A steering switch device (3) includes a support member (4) attached to a spoke (1b), a tiltably operating knob (5) rotatably supported by a holder (10) so as to protrude into a space (2), a pusher (11) and a coil spring (12) as returning means assembled into a cylindrical portion of the operating knob (5), a circuit board (7) retained within the support rnember (4) and having a group of fixed contacts formed therein, a rubber sheet (8) placed on the circuit board (7) and having a group of rubber switches (9) protruding therefrom. The pusher (11) makes a resilient contact with a cam face (10a) of the holder (10) fixed to the support member (4). A push switch mechanism (S2) to be pushed and driven by a driving portion of the operating knob (6) is composed of a fixed contact and a rubber switch (9) disposed in a backside space to be the direction of the tilt operation of the operating knob (5).

## Description

### BACKGROUND OF THE INVENTION

### 1. Field of the Invention

The present invention relates to a steering switch device that is mounted on a steering wheel of a motor vehicle and used to operate various apparatuses, such as an automatic transmission.

### 2. Description of the Related Art

Conventionally, there has been known a technique that a steering switch device is mounted inside a ring portion (annular portion) as a grip portion of a steering wheel of a motor vehicle, and the steering switch device is operated by a driver, so that shift-up or shift-down can be manually performed, for example, during traveling of the vehicle in a drive range.

As a conventional example of this type of steering switch device, for example, JP-A-2003-118587 (pages 3 to 6, Fig. 4) suggests a steering switch device configured such that various signal output means, such as push switches and slide switches, are received within a support member attached to spoke portions and a pad portion of a steering wheel, and an electrical signal is output from a desired signal output means by tilting an operating knob rotatably supported by the support member or by pushing any one of operation keys disposed on the front of the support member.

In such a steering switch device according to the related art, the operating knob used for operation of an automatic transmission protrudes into and is disposed in a space between the ring portion and pad portion of the steering wheel so that it can be tilted back and forth. Since this enables a driver to operate the operating knob while the driver holds the ring portion of the steering wheel with his/her thumb, a good operability can be expected. Since the operating knob is connected to an upper portion of a rotary body and a bearing of a support fixed in the support member pivotally supports the rotary body, the operating knob is rotatably supported by the support member so that it can be tilted. An obliquely downward extending biasing portion and a straightly downward extending changeover portion are provided in the rotary body so as to protrude therefrom. A coil spring and a pusher is assembled in the biasing portion and the pusher always makes a resilient contact with a cam face formed in the support. Therefore, when the operating knob is tilted, the pusher moves along the cam faces to compress the coil spring, and when the operation force is removed, the operating knob automatically returns to its non-operating knob by a resilient force of the coil spring. Further, a small circuit board is substantially horizontally installed below the support. A plurality of fixed contacts formed on the circuit board and a slide member provided with a slider that comes into contact with or separates from the fixed contacts constitute a slide switch mechanism to be driven by the changeover portion when the operating knob is tilted. In other words, the changeover portion engages the slide member, and when the operating knob is tilted, the slide member slides on the circuit board by way of the changeover portion. Therefore, the position of contact between the slider and the plurality of fixed contacts changes, so that an electrical signal corresponding to the change of position can be output. In addition, a side wall of the support is formed with a protrusion. The support is fixedly supported inside the support member by fitting the protrusion into a recess formed in an inner wall of the support member.

The above-descried steering switch device requires an operation force against a resilient force of the coil spring when the operating knob is tilted. Thereby, a relatively high-load rotation-driving mechanism including the operating knob is implemented. Further, a plurality of operation keys to be used to input, for example, switching signals, such as cancel signals, are arranged on the front of the support member. A push switch mechanism to be driven by pushing any of the operation keys is disposed on the circuit board installed substantially vertically within the support member.

As stated above, in the steering switch device according to the related art, the operating knob that protrudes into the space between the ring portion and pad portion of the steering wheel and a signal output means (slide switch mechanism) that is driven by the changeover portion at the time of a tilt operation of the operating knob to output electrical signals are disposed opposite to each other with respect to the center of rotation of the operating knob. Therefore, the length of a rocking body formed by coupling the operating knob with the changeover portion increases. This may increase the size of a relatively high-load rotation-driving mechanism composed of the rocking body, the pusher, the support, etc. As a result, miniaturization of the whole device cannot be easily achieved. Further, since it is difficult to form the rocking body as an integral molding and the structure in which two members including the operating knob and the rotary body are coupled to each other is inevitably adopted, the assembling performance is not good.

### SUMMARY OF THE INVENTION

The present invention has been finalized in view of the drawbacks inherent in the steering switch device according to the related art, and it is an object of the present invention to provide a steering switch device that facilitates miniaturization of the whole device by making compact a relatively high-load rotation-driving mechanism including an operating knob.

In order to achieve the above object, according to one aspect of the invention, there is provided a steering switch device including: a steering wheel in which a pad portion is provided via spoke portions inside a grip portion; a support member attached to the steering wheel; an operating knob rotatably supported by the support member so as to protrude into a space between the grip portion and the pad portion and tilted by an operation force from the front side; a returning means having a resilient member and automatically returning the operating knob to its non-operating position; a signal output means retained by the support member and driven by the operating knob at the time of its tilt operation to output electrical signals. The support member extends on the backside of the operating knob, and the signal output means is disposed between the extending portion and the operating knob.

In the steering switch device configured as such, the operating knob can directly drive the signal output means by effectively using a backside space to be the direction of the tilt operation of the operating knob as the space for disposing the signal output means. Therefore, a relatively high-load rotation-driving mechanism including the operating knob can be made compact, which leads to an improved assembling performance. As a result, miniaturization of the steering switch device becomes easy, and the assembly cost of the device can also be reduced.

In the above configuration, when the steering switch device further includes a circuit board retained by the support member, the circuit board is provided with a push switch mechanism formed by making a fixed contact and a movable contact face each other so as to come into contact with or separate from each other, and the push switch mechanism is used as the signal output means so as to drive the movable contact when the operating knob is tilted, the direction that the operating knob is tilted and the direction that the operating knob drives to push the movable contact can be made approximate coincide with each other. Therefore, the signal output means can be made a simple structure, which is preferable. Here, a push-button switch can be used for the push switch mechanism. For example, when a push switch mechanism is employed in which the fixed contact is formed on the circuit board and a rubber switch having the movable contact is placed on the circuit board, the operating knob may be provided with a driving portion that pushes in the rubber switch to elastically deform the rubber switch. In this case, preferably, a portion of the driving portion that faces the rubber switch is formed as an inclined face, and the inclined face is inclined such that, as it goes away from the center of rotation of the operating knob, the spacing between the inclined face and the rubber switch becomes large. Since this allows the driving portion to almost straightly push in the rubber switch with the tilt operation of the operating knob, any malfunction of the push switch mechanism can be surely prevented, which leads to a good operational feeling.

Further, in the above configuration, when the returning means has a pusher to be biased by the resilient member and a cam face retained by the support member and making a resilient contact with the pusher, and the pusher is interposed between the cam face and the operating knob, the pusher can be moved along the cam face by tilting the operating knob against a resilient force of the resilient member. Therefore, when an operation force is removed, the operating knob can be surely returned to its non-operating position by the resilient force. In this case, when the resilient member is a coil spring, a cylindrical portion having a portion facing the cam face formed as an open end is provided in the operating knob so as to protrude therefrom, and the coil spring and the pusher are assembled in the cylindrical portion, returning means for a relatively high-load operating knob can be compactly integrated, which is advantageous to miniaturization of the whole device. Also, when the operating knob is tilted, the pusher can be surely caused to follow the tilting and drop out of the coil spring can also be prevented. Therefore, the reliability of the returning means is easily enhanced.

Further, in the above configuration, preferably, the steering switch device further includes an additional signal output means retained by the support member at a position spaced apart from the signal output means, and an operating member that is supported by the support member while predetermined operation is allowed and that drives the additional signal output means. As a result, a multi-functional steering switch device that can input various kinds of switching signals can be implemented.

According to the steering switch device, since the backside space to be the direction of the tilt operation of the operating knob is utilized such that the signal output means is disposed in the space, the operation knob can directly drive the signal output means. Therefore, a relatively high-load rotation-driving mechanism including the operating knob can be made compact. As a result, a relatively high-load rotation-driving mechanism including an operating knob compact can be made compact, so that an excellent steering switch device in which the assembling performance is improved, the miniaturization is facilitated, and the assembly cost is reduced can be obtained.

### BRIEF DESCRIPTION OF THE DRAWINGS

Fig. 1 is an external perspective view of a steering switch device according to an embodiment of the invention;
Fig. 2 is a plan view showing a steering wheel on which the steering switch device is mounted;
Fig. 3 is an exploded perspective view of the steering switch device;
Fig. 4 is a cross-sectional view taken along line IV-IV of Fig. 1;
Fig. 5 is a cross-sectional view taken along line V-V of Fig. 1;
Fig. 6 is a cross-sectional view taken along line VI-VI of Fig. 1;
Fig. 7 illustrates a mounting structure of an operating knob and a holder that are provided in the steering switch device;
Fig. 8 illustrates the operation of the operating knob when it is tilted; and
Fig. 9 illustrates the operation of an operating knob of a steering switch device according to another embodiment of the invention.

### DESCRIPTION OF THE PREFERRED EMBODIMENT

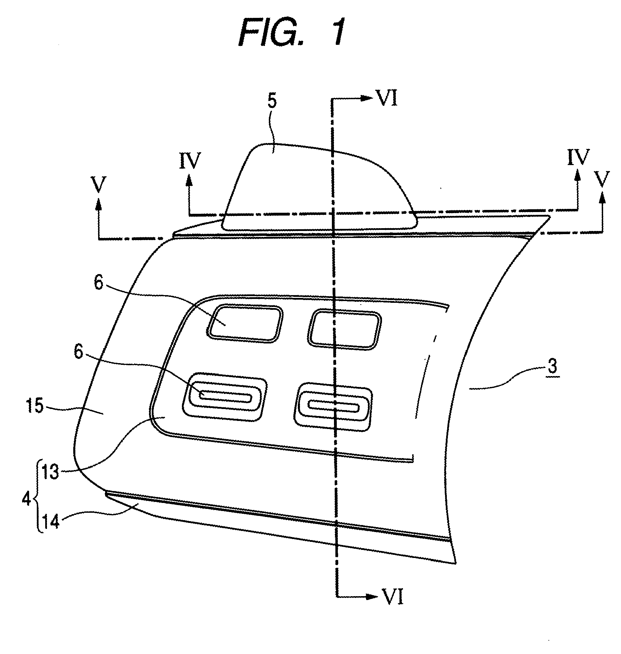

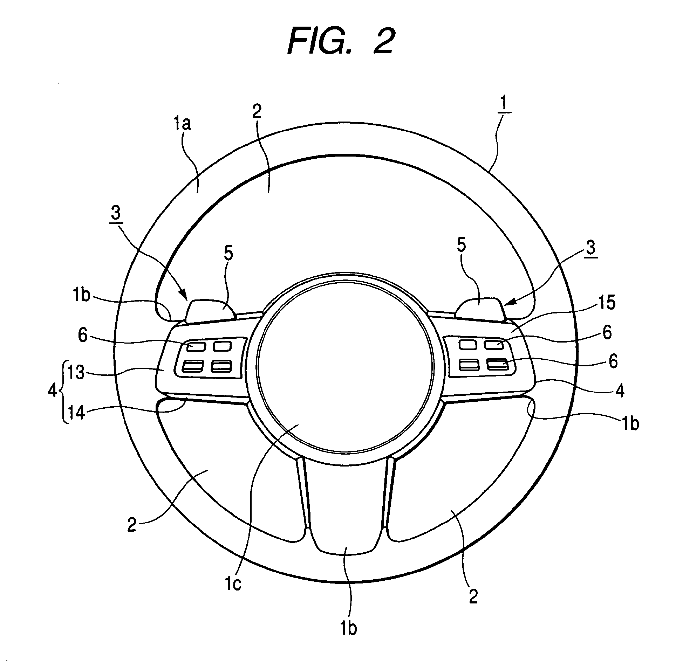

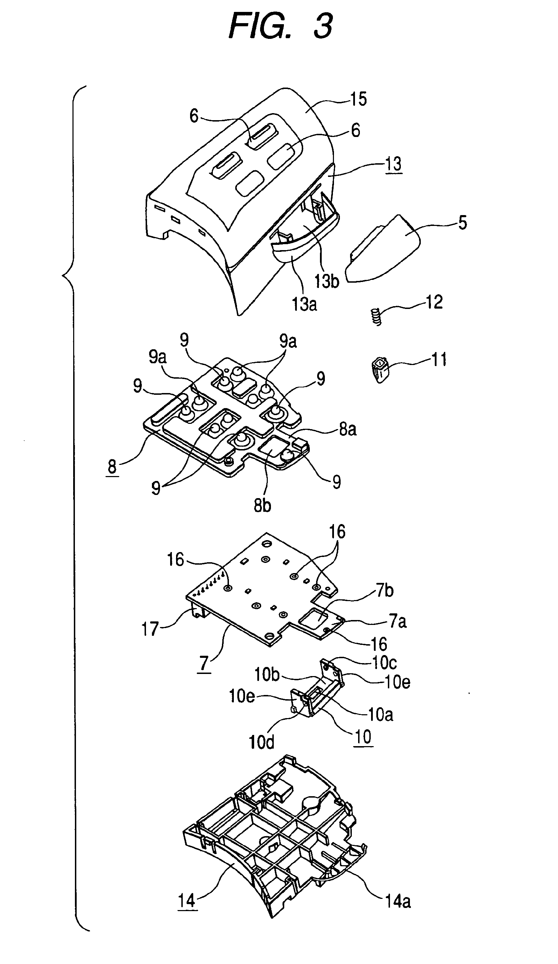

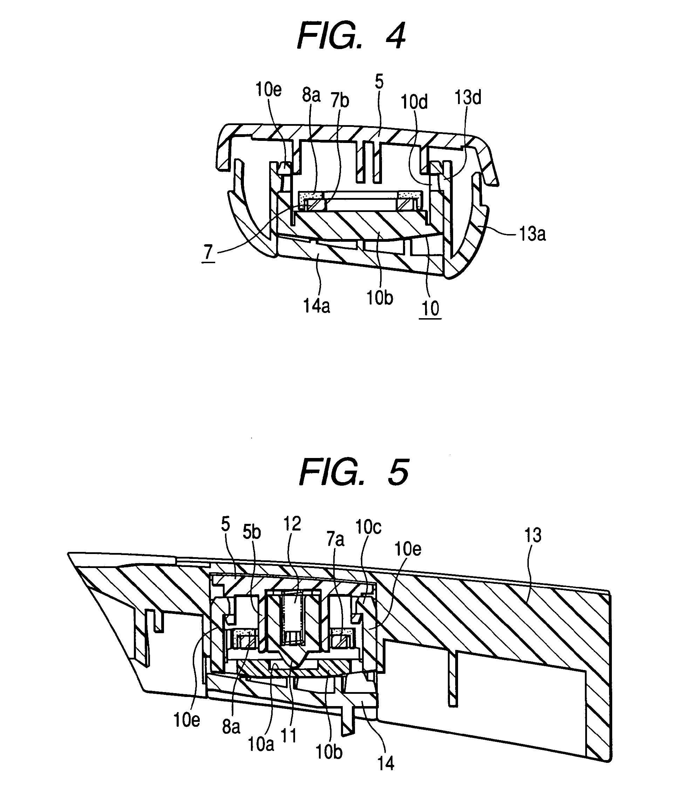

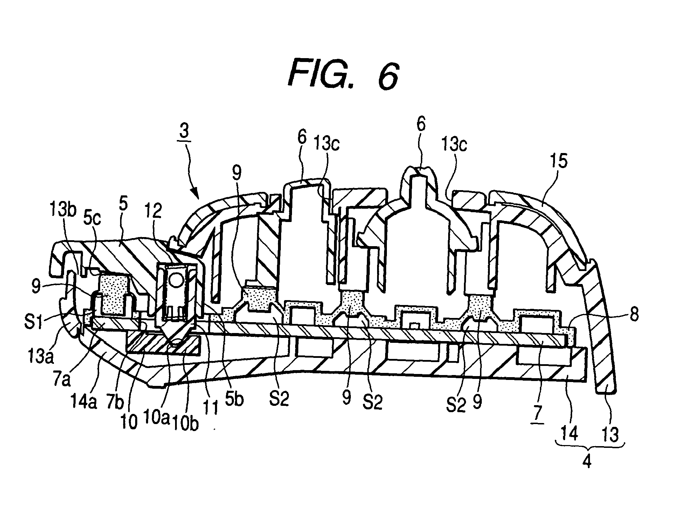

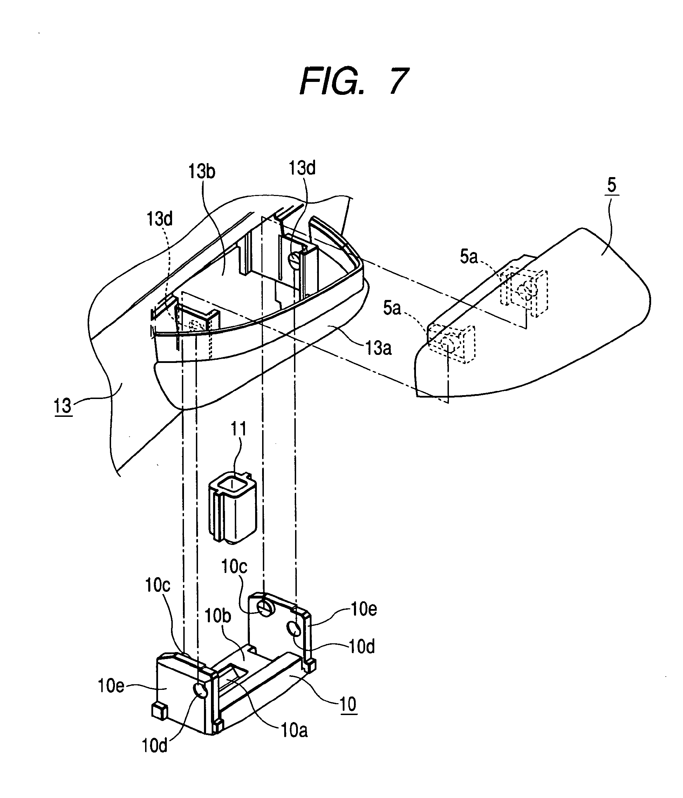

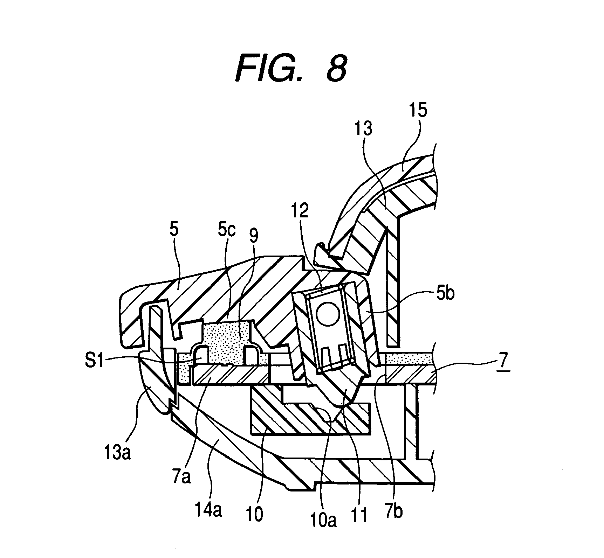

Hereinafter, preferred embodiments of the invention will be described with reference to the accompanying drawings. Fig. 1 is an external perspective view of a steering switch device according to an embodiment of the invention, Fig. 2 is a plan view showing a steering wheel on which the steering switch device is mounted, Fig. 3 is an exploded perspective view of the steering switch device, Fig. 4 is a cross-sectional view taken along line IV-IV of Fig. 1, Fig. 5 is a cross-sectional view taken along line V-V of Fig. 1, Fig. 6 is a cross-sectional view taken along line VI-VI of Fig. 1, Fig. 7 illustrates a mounting structure of an operating knob and a holder that are provided in the steering switch device, and Fig. 8 illustrates the operation of the operating knob when it is tilted.

As shown in FIG. 2, a steering wheel 1 of a motor vehicle includes an annular ring portion 1a serving as a grip portion, a plurality of spoke portions 1b extending inside the ring portion 1a, and a pad portion 1c in the inner center of the ring portion 1a to cover the spoke portions 1b. A plurality of (for example, three) spaces 2 are defined between the ring portion 1a and the pad portion 1c. Steering switch devices 3 are mounted on both the right and left sides, respectively, of the pad portion 1c, and a portion of each steering switch device 3 protrudes into the upper space 2. In this embodiment, since both the steering switch devices 3 which are located on the right and left sides of the pad portion 1c are bilaterally symmetrical with respect to the pad portion and have the same basic structure and operation, the steering switch device 3 located on the left side of the pad portion 1c will be described below.

The steering switch device 3 principally includes a support member 4 attached to the spoke portion 1b of the steering wheel 1, a tiltably operating knob 5 rotatably supported by the support member 4 and protruding into the space 2 of the steering wheel 1, a plurality of (for example, four) operating members 6 disposed on the front of the support member 4, a circuit board 7 fixed to the inside of the support member 4, a rubber sheet 8 placed on a circuit board 7 and having a plurality of rubber switches 9 with movable contacts (not shown) disposed therein protruding therefrom, a holder 10 snap-fitted into the support member 4 to rotatably support the operating knob 5, and a presser 11 and a coil spring 12 for applying an operation load and a restoring force to the operating knob 5. As will be described below, the operating knob 5 can be tilted (pushed) with a driver's fingers. This tilt operation allows, for example, shift-down. In addition, the steering switching device 3 located on the right side of the pad portion 1c is adapted such that, for example, shift-up can be performed by the tilt operation of the operating knob 5.

The support member 4 is a combination integrated by fitting resin moldings, i.e., a main case 13 and a rear case 14 to each other. A decorative cover 15 is provided on the front of the main case 13. The main case 13 and the rear case 14 are fixedly positioned with the spoke portion 1b of the steering wheel 1 sandwiched therebetween from the front and rear. An upwardly projecting portion 13a of the main case 13 and an upwardly projecting portion 14a of the rear case 14 protrude into the space 2 of the steering wheel 1 on the rear side of the operating knob 5. The upwardly projecting portion 13a of the main case 13 is provided with an opening 13b to be covered with the operating knob 5, and the main case 13 is provided with a plurality of openings 13c for allowing the respective operating members 6 to be disposed therein. The circuit board 7 and the rubber sheet 8 are incorporated in the support member 4, and the holder 10 is incorporated in the opening 13b of the main case 13.

The operating knob 5 is a resin molding. As shown in Fig. 7, the operating knob 5 is provided with a pair of shaft hole 5a. A support shaft 10c of the holder 10 is fitted into the shaft holes 5a so that the operating knob 5 can be rotatably supported by the holder 10. A cylindrical portion 5b is provided on the back face of the operating knob 5 so as to protrude therefrom, and the pusher 11 and the coil spring 12 are incorporated in the cylindrical portion 5b (see Fig. 6). Also, the back face of the operating knob 5 is provided with a driving portion 5c, and the driving portion 5c faces a rubber switch 9 provided so as to protrude from the an extending portion 8a of the rubber sheet 8. In addition, the face of the driving portion 5c that faces the rubber switch 9 is formed as an inclined face that is inclined such that, as it goes away from the center of rotation of the operating knob 5, the spacing between the driving portion and the rubber switch 9 becomes wide.

The holder 10 is a resin molding and has a bottom plate 10b with an inner bottom face provided with a cam face 10a and a pair of side walls 10e provided with the support shaft 10c and locking holes 10d. The side walls 10e are formed at both ends of the bottom plate 10b so as to stand therefrom. As shown in Fig. 7, the holder 10 is assembled by snap fitting. The snap fitting is realized as the engaging holes 10d provided in the side walls 10e, respectively, are fitted on a pair of fitting projections 13d protruding into the opening 13b of the main case 13. Thereby, the holder 10 can be fixedly positioned in the upwardly projecting portion 13a. The cam face 10a of the holder 10 has a V-shaped cross section, and the pusher 11 always makes a resilient contact with the cam face 10a by a biasing force of the coil spring 12. As will be described below, while the operating knob 5 is in a non-operating state, the pusher 11 comes into a resilient contact with a valley of the cam face 10a. However, when the pusher 11 is tilted by the tilt operation of the operating knob 5, the coil spring 12 is compressed to increase a resilient force and the pusher 11 changes a resilient contact position from the valley of the cam face 10a to a crest thereof.

The circuit board 7 is formed with fixed contacts 16 at positions corresponding to the respective rubber switches 9. A connector 17 to be connected to wiring patterns (not shown) led out from the fixed contacts 16 are mounted on one corner of the circuit board 7. As shown in Fig. 3, a projecting circuit board 7a having a rectangular cutout 7b is provided at one side of the circuit board 7 so as to extend therefrom. The cutout 7b is formed as an escape hole for allowing the pusher 11 to movably pass therethrough. The rubber sheet 8 placed on the circuit board 7 has the same shape in plan view as the circular board 7, and a projecting portion 8a having a cutout 8b is provided in a region placed on the projecting circuit board 7a of the rubber sheet 8 so as to extend therefrom. One rubber switch 9 to be pressingly driven by the operating knob 5 is provided in the projecting portion 8a so as to protrude therefrom, and the fixed contact 16 located on the projecting circuit board 7a and the corresponding movable contact (not shown) disposed inside the rubber switch 9 faces each other so as to come into contact with or separate from each other, thereby forming a push switch mechanism S1. Further, six rubber switches 9 driven to be pushed by the operating members 6, respectively, and four rubber projections 9a having the same shape as the adjacent rubber switches 9 and not having movable contacts disposed therein are provided in the region of the rubber sheet 8 other than the projecting portion 8a so as to protrude therefrom. The fixed contacts 16 located in the region of the circuit board 7 other than the projecting circuit board 7a and the corresponding movable contacts disposed inside the rubber switches 9 located above the fixed contacts, respectively, face each other so as to come into contact with and separate therefrom, thereby forming six sets of push switch mechanisms S2, respectively. In other words, as apparent from Fig. 6, the steering switch device 3 is designed such that the operating knob 5 and the operating members 6 are disposed on one side of the circuit board 7, and the cam face 10a is disposed at a location facing the cutouts 7b and 8b on the other side of the circuit board 7, and the depth dimension of the whole device does not increase even if the pusher 11 is interposed between the operating knob 5 and the cam face 10a.

In addition, since the respective operating members 6 disposed on the front of the support member 4 are supported by the rubber switches 9 and the rubber projections 9a such that they can be pushed and rocked, applying an operating force to buckle the rubber switches 9 and the rubber projections 9a will be helpful to operate the operating members 6. In contrast, since the operating knob 5 is supported by the holder 10 with the pusher 11 being brought into a resilient contact with the valley of the cam face 10a, in tilting the operating knob 5, the coil spring 12 has to be compressed to separate the pusher 11 from the valley and consequently an operation force that is a relatively high load against a resilient force of the coil spring 12 is required.

In the steering switch device 3 configured in this way, the operation of a relatively high-load rotation-driving mechanism including the operating knob 5 will first be described. As shown in Fig. 6, since the pusher 11 pushes the coil spring 12 so as to be brought into a resilient contact with the valley while the operating knob 5 is in a non-operating state, the driving portion 5c of the operating knob 5 is located away from the rubber switch 9 on the projecting circuit board 7a. Accordingly, the movable contact of the rubber switch 9 is kept in a non-contact state with the facing fixed contact 16. As a result, the push switch mechanism S1 is in an off-state. In this state, when the operating knob 5 is tilted by applying an operation force to the operating knob 5 from the front side, the pusher 11, as shown in Fig. 8, is driven and tilted by the cylindrical portion 5b of the operating knob 5. Therefore, while the coil spring 12 is compressed within the cylindrical portion 5b to increase the resilient force, the pusher 11 is changed in the resilient contact position from the valley 10a of the cam face 10a to the crest (inclined face) thereof. Then, when the pusher 11 has been separated from the valley, a click feeling is generated. Further, since the driving portion 5c pushes in the rubber switch 9 on the projecting circuit board 7a by such the tilt operation of the operating knob 5, the movable contact of the rubber switch 9 comes into contact with the facing fixed contact 16, whereby an ON signal is output from the push switch mechanism S1. Accordingly, on the basis of the ON signal, shift-down can be manually performed during traveling in a drive range.

Thereafter, when the operation force to the operating knob 5 tilted as described above is removed, the pusher 11 receives the resilient force of the coil spring 12 so as to be pushed back to the valley of the cam face 10a from the crest thereof. Therefore, the pusher 11 drives the cylindrical portion 5b whereby the operating knob 5 automatically returns to the non-operating position as shown in Fig. 6. Further, since the driving portion 5c is separated from the rubber switch 9 on the projecting circuit board 7a along with the returning operation of the operating knob 5, the movable contact of the rubber switch 9 is pulled away from the fixed contact 16 which has been in contact therewith, whereby the push switch mechanism S1 returns to the OFF-state.

Next, the operation of the respective operating members 6 disposed on the front of the support member 4 will be described. When the operating member 6 located on the upper side in Fig. 1 is pushed, the operating member 6 drives to push the corresponding rubber switch 9 to elastically deform (buckle and deform) the switch. Therefore, the movable contact of the rubber switch 9 comes into contact with the facing fixed contact 16, whereby an ON signal is output from the push switch mechanism S2. Then, when the operation force is removed, the push switch mechanism S2 automatically returns to its non-operating position by the resilient force of the rubber switch 9. Further, when the operating member 6 located on the lower side in Fig. 1 is rocked upward or downward, the operating member 6 drives to push the corresponding rubber switch 9 or rubber projection 9a depending on the rocking direction to elastically deform (buckle) the switch. Therefore, the movable contact of the rubber switch 9 comes into contact with the facing fixed contact 16, whereby an ON signal is output from the push switch mechanism S2. Then, when the operation force is removed, the push switch mechanism S2 automatically returns to its non-operating position by the resilient force of the rubber switch 9 or the rubber switch 9a. In addition, when the rubber switch 9 or rubber projection 9a is pushed and buckled, a click feeling is generated.

As such, in the steering switch device 3 according to the present embodiment, since the backside space to be the direction of the tilt operation of the operating knob 5 is utilized such that the push switch mechanism S1 for the operating knob 5 is disposed in the space, the relatively high-load rotation-driving mechanism including the operating knob 5 can be made compact and thus miniaturization of the whole device can be realized. Further, since the driving portion 5c of the operating knob 5 can directly drive the push switch 9 of the push switch mechanism S1 without interposing a separate member between the push switch mechanism S1 and the operating knob 5, this is also advantageous to a reduction in number of parts and an improvement in assembling performance. In addition, as shown in Fig. 6, since the face of the driving portion 5c that faces the rubber switch 9 is formed as an inclined face, and the driving portion 5c almost straightly pushes in the rubber switch 9 with the tilt operation of the operating knob 5, a malfunction rarely occurs in the push switch mechanism S1. As a result, a good operational feeling can be expected.

Further, in the steering switch device 3, the push switch mechanism S1 for the operating knob 5 and the plurality of push switch mechanisms S2 for the respective operating members 6 are all disposed on the common circuit board 7 and the group of rubber switches 9 of the push switch mechanism S1 and S2 are also provided on the rubber sheet 8 so as to protrude therefrom. Therefore, the number of parts can be significantly reduced, and the electrical connection can also be simplified. Consequently, the assembling performance of the steering switch device 3 is significantly excellent. Moreover, in the steering switch device 3, it is considered that the projecting circuit board 7a of the circuit board 7 and the projecting portion 8a of the rubber sheet 8 to be placed on the projecting circuit board 7a are respectively provided with cutouts 7b and 8b so that the projecting circuit board 7a and the projecting portion 8a do not hinder the operation of the pusher 11. Therefore, a mounting space required for a relatively high-load rotation-driving mechanism including the operating knob 5 can be ensured without hindering miniaturization of the whole device.

Further, in the steering switch device 3, the holder 10 having the cam face 10a rotatably supports the operating knob 5 without interposing a separate member, and the holder 10 can be simply and precisely attached to the support member 4 (main case 13) by snap fitting. Therefore, the positional accuracy of a relatively high-load rotation-driving mechanism including the operating knob 5 can be easily ensured, and the assembling work can also be easily performed. Moreover, since the holder 10 has such a simple shape that the side walls 10e stands from both ends of the bottom plate 10b, there is no fear that miniaturization of the rotation-driving mechanism can be sacrificed. Moreover, since the engaging hole 10d corresponding to the fitting projection 13d of the main case 13 and the support shaft 10c corresponding to the shaft hole 5a of the operating knob 5 are provided in each side walls 10e of the holder 10 in proximity to each other, attachment of the holder 10 to the support member 4 (main case 13) and attachment of the holder 10 to the operating knob 5 can be performed almost at a time. As a result, assembling work of the rotation-driving mechanism becomes significantly easy. In addition, the relation in unevenness between the fitting projection 13d and the engaging hole 10d may be reversed, and the relation in unevenness between the shaft hole 5a and the support shaft 10c may be reversed.

Further, in the steering switch device 3, since the pusher 11 and coil spring 12 for automatically returning the operating knob 5 to its non-operating position is assembled in the cylindrical portion 5b of the operating knob 5, returning means for a relatively high-load operating knob 5 can be compactly integrated, which is advantageous to miniaturization of the whole device. Moreover, when the operating knob 5 is tilted, the pusher 11 can be surely caused to follow the tilting by the cylindrical portion 5b, and drop out of the coil spring 12 can also be prevented. Therefore, the reliability of the returning means is also enhanced.

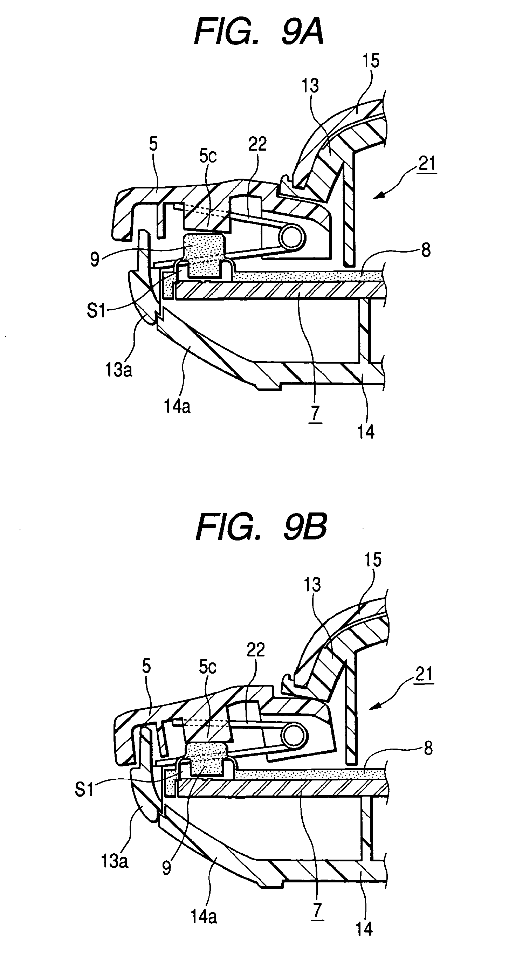

Fig. 9 illustrates the operation of an operating knob of a steering switch device according to another embodiment of the invention; Fig. 9A shows the operating knob when it is not operated and Fig. 9B shows the operating state when it is tilted. In addition, in Fig. 9, the portions corresponding to those of the above-mentioned embodiment are represented by the same reference numerals, and thus the redundant explanation will be omitted.

The steering switch device 21 shown in Fig. 9 is greatly different from the above-mentioned embodiment in that the pusher 11, the cylindrical portion 5b, the cam face 10a, etc. are omitted by using a torsion spring 22 that can generate a relatively large resilient force as a resilient member for automatically returning the operating knob 5 to its non-operating position. As a result, in the steering wheel device 21, the configuration of a relatively high-load rotation-driving mechanism including the operating knob 5 can be extremely simplified, which further promotes miniaturization.

Although the above-mentioned embodiments have been described about the steering wheel 1 in which the ring portion 1a as a grip portion is annular, the shape of the grip portion is not limited to the annular one. For example, the grip portion may be a circular arc-shaped grip portion provided on both side of the pad portion with a spoke portion therebetween or may be a semicircular arc-shaped grip portion provided from both sides of the pad portion to the upper portion thereof with a spoke portion therebetween

## Claims

1. A steering switch device (3) comprising:
a steering wheel (1) in which a pad portion (1c) is provided via a spoke portion (1b) inside a grip portion (1a);
a support member (4) attached to the steering wheel (1);
an operating knob (5) rotatably supported by the support member (4) so as to protrude into a space (2) between the grip portion (1a) and the pad portion (1c) and tilted by an operation force from the front side;
a returning means having a resilient member and automatically returning the operating knob (5) to its non-operating position;
a signal output means retained by the support member (4) and driven by the operating knob (5) at the time of its tilt operation to output electrical signals;
**characterized in that** the support member (4) extends on the backside of the operating knob (5), and the signal output means is disposed between an extending portion (8a) and the operating knob (5).

2. The steering switch device (3) according to claim 1, further comprising a circuit board (7) retained by the support member (4),
**characterized in that** the circuit board (7) is provided with a push switch mechanism (S1, S2) formed by making a fixed contact (16) and a movable contact face each other so as to come into contact with or separate from each other, and the push switch mechanism (S1, S2) is used as the signal output means so as to drive the movable contact when the operating knob (5) is tilted.

3. The steering switch device (3) according to claim 2,
**characterized in that** the fixed contact (16) of the push switch mechanism (S1, S2) is formed on the circuit board (7), a rubber switch (8) having the movable contact is placed on the circuit board (7), and the operating knob (5) is provided with a driving portion (5c) that pushes in the rubber switch (8) to elastically deform the rubber switch (8).

4. The steering switch device (3) according to claim 3,
**characterized in that** a portion of the driving portion (5c) that faces the rubber switch (8) is formed as an inclined face and the inclined face is inclined such that, as it goes away from the center of rotation of the operating knob (5), the spacing between the inclined face and the rubber switch (8) becomes large.

5. The steering switch device (3) according to any of claims 1 to 4,
**characterized in that** the returning means has a pusher (11) to be biased by the resilient member and a cam face (10a) retained by the support member (4) and making a resilient contact with the pusher (11), and the pusher (11) is interposed between the cam face (10a) and the operating knob (5).

6. The steering switch device (3) according to claim 5,
**characterized in that** the resilient member is a coil spring (12), a cylindrical portion (5b) having a portion facing the cam face (10a) formed as an open end is provided in the operating knob (5) so as to protrude therefrom, and the coil spring (12) and the pusher (11) are assembled in the cylindrical portion (5b).

7. The steering switch device (3) according to any of claims 1 to 6, further comprising:
an additional signal output means retained by the support member (4) at a position spaced apart from the signal output means; and
an operating member (6) that is supported by the support member (4) while predetermined operation is allowed and that drives the additional signal output means.
